Europäisches Patentamt

European Patent Office

Office européen des brevets

(19)

(11) Veröffentlichungsnummer: **0 231 555**
**A1**

(12) **EUROPÄISCHE PATENTANMELDUNG**

(21) Anmeldenummer: **86202364.5**

(22) Anmeldetag: **22.12.86**

(51) Int. Cl.³: **B 62 D 13/02**
**B 60 D 1/00**

(30) Priorität: **08.01.86 NL 8600025**

(43) Veröffentlichungstag der Anmeldung:
**12.08.87 Patentblatt 87/33**

(84) Benannte Vertragsstaaten:
**AT BE CH DE ES FR GB GR IT LI LU NL SE**

(71) Anmelder: **B.V. Carrosseriefabriek Joost Lamboo**
**Fokkerstraat 9**
**2722 NH Zoetermeer(NL)**

(72) Erfinder: **Vollebregt, Adrianus Hendrikus Theresia**
**Jan Steen Laan 4**
**NL-2712 TG ZOETERMEER(NL)**

(74) Vertreter: **Kooy, Leendert Willem et al,**
**OCTROOIBUREAU VRIESENDORP & GAADE P.O. Box 266**
**NL-2501 AW The Hague(NL)**

(54) **Kupplungsvorrichtung zwischen einem ziehenden Fahrzeug und einem Anhängewagen.**

(57) Beschrieben ist eine Kupplungsvorrichtung zwischen einem ziehenden Fahrzeug und einem Anhängewagen, die ein an das eine Fahrzeug montiertes Fangmaul enthält und eine Zugstange, die an das andere Fahrzeug montiert ist und die mittels eines Kupplungsbolzens mit dem Fangmaul verbindbar ist.

Laut der Erfindung ist das Fangmaul (1) in Längsrichtung verschiebbar an dem Chassis (4, 5) des diesbezüglichen Fahrzeuges montiert.

FIG.1

EP 0 231 555 A1

Kupplungsvorrichtung zwischen einem ziehenden Fahrzeug und
einem Anhängewagen

Die vorliegende Erfindung bezieht sich auf eine Kupplungsvorrichtung zwischen einem ziehenden Fahrzeug und einem Anhängewagen,
die ein an das eine Fahrzeug montiertes Fangmaul enthält und eine
Zugstange, die an das andere Fahrzeug montiert ist und die
mittels eines Kupplungsbolzens mit dem Fangmaul verbindbar ist.

Eine Kupplungsvorrichtung der obenbeschriebenen Art wird jetzt in
grossem Umfange angewandt. Die Gesamtlänge einer Kombination eines
ziehenden Fahrzeuges, insbesondere eines Lastwagens, und eines
Anhängewagens darf aufgrund international gültiger Bestimmungen
jetzt höchstens 18 Meter sein. Da man mit einer derartigen Kombination eine Kurve im Weg durchfahren können muss, und manövrieren können muss, soll zwischen der Hinterseite des Lastwagens
und der Vorderseite des Anhängewagens einen Mindestabstand von
etwa 53 bis 85 cm gewahrt werden, in Abhängigkeit der angewandten
Konstruktion des Lastwagens und des Anhängewagens. Dieser Mindestabstand ist erforderlich weil die Hinterseite des Lastwagens und
die Vorderseite des Anhängewagens beim Fahren durch Kurven und
auch beim Manövrieren an einer der beiden Seiten nicht nur in
einer Horizontalfläche, sondern auf Gebirgsstrassen, und insbesondere in Haarnadelkurven, auch in einer Vertikalfläche und dann
insbesondere an den oberen Ecken aufeinander zubewegen.
Infolge des erforderlichen Mindestabstandes zwischen Lastwagen
und Anhängewagen ist das verfügbare Ladevolumen einer derartigen
Kombination auf einen bestimmten Höchstwert beschränkt.

Die Erfindung hat den Zweck die Kupplungsvorrichtung zwischen
einem ziehenden Fahrzeug, insbesondere einem Lastwagen mit Lademulde, und einem Anhängewagen in solcher Weise aufzuführen, dass das Ladevolumen einer derartigen Kombination vergrössert werden
kann, ohne Ueberschreitung der gesetzlich vorgeschriebenen
Maximallänge und anderer Abmessungen, an denen bestimmte Höchstwerte gestellt sind, während mit der Kombination Haarnadelkurven
auf Gebirgsstrassen problemlos gefahren werden können und weiter
alle Manöver ausgeführt werden können, die auch mit derartigen
Kombinationen, die mit der bekannten Kupplungsvorrichtung ausgerüstet sind, möglich sind.

Dieses Ziel wird gemäss der Erfindung dadurch erreicht, dass das
Fangmaul in Längsrichtung verschiebbar am Chassis des diesbezüglichen Fahrzeuges montiert ist.

Durch Anwendung dieser Massnahme ist es möglich den Abstand
zwischen der Hinterseite des ziehenden Fahrzeuges, insbesondere
des Lastwagens, und der Vorderseite des Anhängewagens, wenn mit
dieser Kombination geradeaus gefahren wird, kleiner zu machen als
den erforderlichen Abstand bei der konventionellen Kupplungsvorrichtung und zwar bis einen Mindestwert von etwa 25 cm, durch
Verschiebung des Fangmauls der Kupplungsvorrichtung nach Vorne
in bezug auf das Chassis des ziehenden Fahrzeuges, bzw. nach
hinten in bezug auf das Chassis des Anhängewagens. Innerhalb der
vorgeschriebenen Maximallänge der Kombination kann das verfügbare
Ladevolumen jetzt entsprechend vergrössert werden, durch Verlängerung
der Lademulde des Lastwagens und/oder des Anhängewagens. Sollte man
mit der Kombination zum Beispiel eine Gebirgsstrasse mit Haarnadelkurven befahren, dann könne das Fangmaul in bezug auf das Chassis
des ziehenden Fahrzeuges nach hinten, bzw. in bezug auf das Chassis
des Anhängewagens nach vorn verschoben werden, so dass den erforderlichen Mindestabstand zwischen der Hinterseite des Lastwagens
und der Vorderseite des Anhängewagens unter allen Umständen aufrechterhalten bleibt.

Die Versetzung des Fangmaules in bezug auf das Chassis des ziehenden Fahrzeuges oder des Anhängewagens kann z.B. auf
mechanischem, elektrischem oder hydraulischem Wege, oder eine
Kombination davon, mit der Drehbewegung des Lenkrades oder mit
der Bewegung eines anderen Teiles der Lenkvorrichtung des
ziehenden Fahrzeuges gekuppelt werden.

Bei einer bevorzugten Ausführungsform der Kupplungsvorrichtung
gemäss der Erfindung, wobei das Fangmaul an dem Chassis des
ziehenden Fahrzeuges und die Zugstange an einem Raduntergestell
des Anhängewagens montiert ist, ist das Fangmaul einerseits über
ein Zahnradgetrieb und einen Kurbelpleuelstangemechanismus mit
dem Chassis des ziehenden Fahrzeuges gekuppelt und andererseits
ist es drehbar verbunden mit einem Schlitten, der in Längsrichtung
verschiebbar an dem Chassis des ziehenden Fahrzeuges montiert ist,
und sind das Fangmaul und die Zugstange in der Horizontalfläche
steif miteinander verbunden.

Durch Anwendung dieser Massnahmen wird beim Kurvenfahren oder beim
Manövrieren mit der Kombination des ziehenden Fahrzeuges und des
Anhängewagens in einfacher und billiger Weise eine automatische
Versetzung des Fangmaules in bezug auf das Chassis des ziehenden
Fahrzeuges erreicht, wobei die Längsversetzung des Fangmaules
direkt proportional zu der Eckversetzung in einer Horizontalfläche
der Längsachse des Anhängewagens in bezug auf die Längsachse des
ziehenden Fahrzeuges ist.

Bei einer besonders zweckmässigen Ausführungsform der Kupplungsvorrichtung gemäss der Erfindung ist das Fangmaul fest mit einem
Zahnrad verbunden, das drehbar um eine senkrecht auf der Ebene
des Chassises stehende Mittellinie an dem Schlitten montiert ist,
der in Längsrichtung des Chassises verschiebbar geführt ist, und
das in Eingreiff mit einem Ritzel ist, das auf einer Achse befestigt ist, die drehbar auf dem Schlitten montiert ist und auf
der ein Kurbelarm befestigt ist, der gelenkig mit einer Pleuelstange verbunden ist, die an seinem anderen Ende gelenkig mit einem fest an dem Chassis befestigen Teil verbunden ist, in solcher Weise, dass wenn das ziehende Fahrzeug und der Anhängewagen in Längsrichtung axial ausgerichtet sind, der Kurbelarm und die Pleuelstange axial ausgerichtet sind.

Diese Massnahmen führen zu einer robusten und trotzdem relativ billigen Ausführungsform der Kupplungsvorrichtung gemäss der Erfindung.

Die Erfindung wird an Hand der Zeichnung mit einem Paar Ausführungbeispielen näher erläutert.

Die Figuren 1, 2 und 3 zeigen eine Draufsicht der Kupplungsvorrichtung gemäss der Erfindung in drei unterschiedlichen Positionen, namentlich in der Ausgangsposition beim geradeaus Fahren der Kombination, in einer Zwischenposition beim Fahren einer Kurve nach links bzw. in der äussersten Position betreffs der Vergrösserung des Abstandes zwischen dem ziehenden Fahrzeug und dem Anhängewagen;

Figur 4 ist eine Draufsicht die mit Figur 1 übereinstimmt und zeigt schematisch eine feste Verbindung in einer Horizontalebene zwischen dem Fangmaul des ziehenden Fahrzeuges und der Zugstange des Anhängewagens;

Figur 5 stimmt mit Figur 4 überein, zeigt jedoch eine andere Ausführungsform der festen Verbindung;

Figur 6 ist eine Seitenansicht der festen Verbindung gemäss Figur 5;

Figur 7 ist eine Draufsicht der Kupplungsvorrichtung gemäss der Erfindung;

Figur 8 ist eine Seitenansicht der Vorrichtung gemäss Figur 7;

Figur 9 ist ein Querschnitt gemäss der Linie IX-IX in Figur 7;

Figur 9A ist ein Querschnitt gemäss der Linie IXA-IXA in Figur 3 und

Figur 10 ist ein Querschnitt gemäss der Linie X-X in Figur 7.

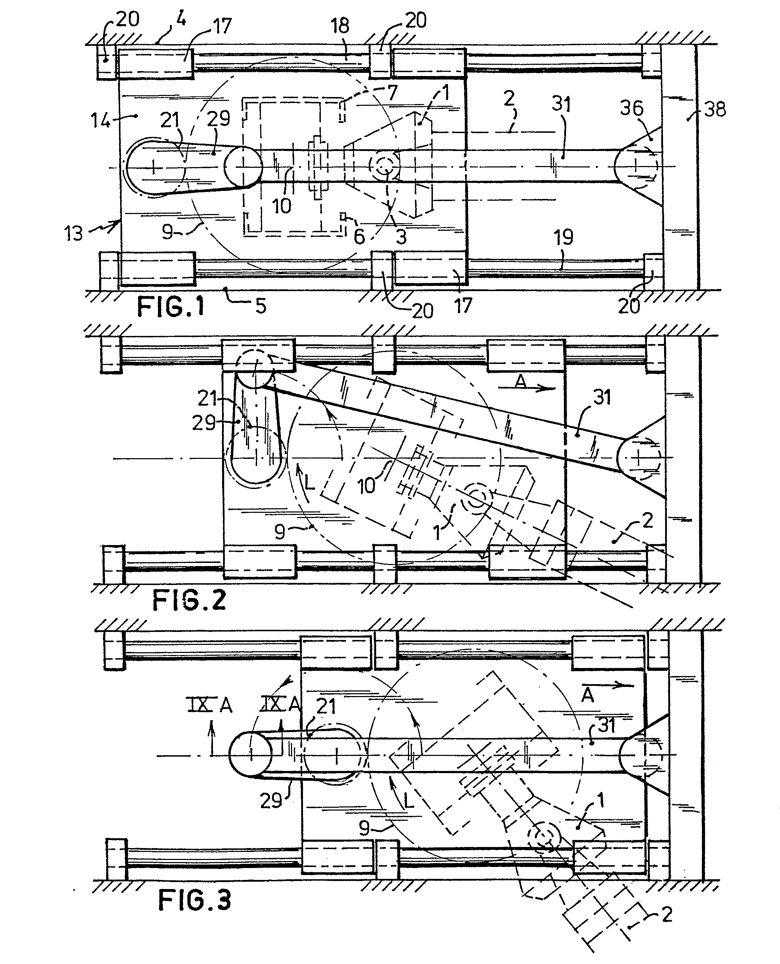

Die Figuren 1, 2 und 3 zeigen schematisch die Konstruktion und die Wirkung der Kupplungsvorrichtung gemäss der Erfindung zwischen einem ziehenden Fahrzeug, insbesondere einem Lastkraftwagen, und einem Anhängewagen, was nachstehend näher erläutert wird.

Das ziehende Fahrzeug hat, wie üblich, ein Fangmaul 1, und der Anhängewagen hat eine Zugstange 2, die mittels eines Kupplungsbolzens 3 miteinander kuppelbar sind. Das ziehende Fahrzeug hat ein Chassis, dessen Längsbalken 4 und 5 schematisch in den Figuren 1 und 3 gezeichnet worden sind.

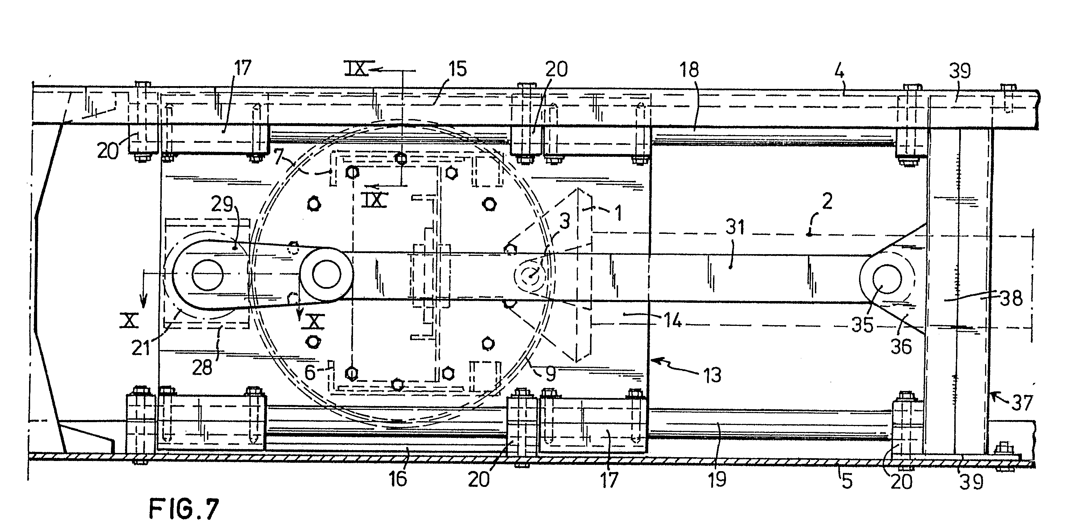

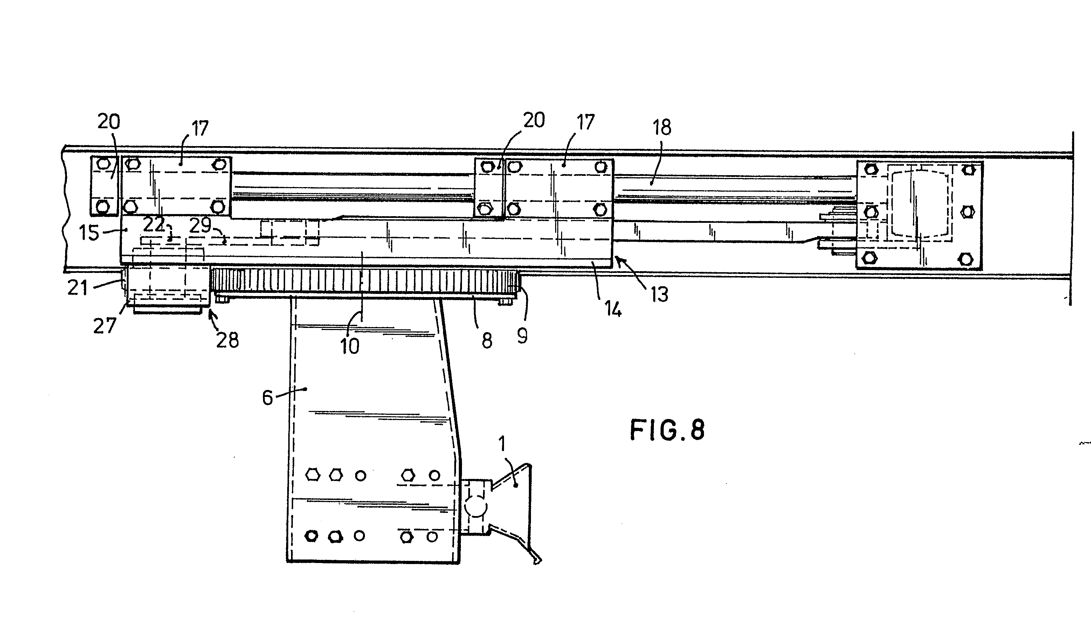

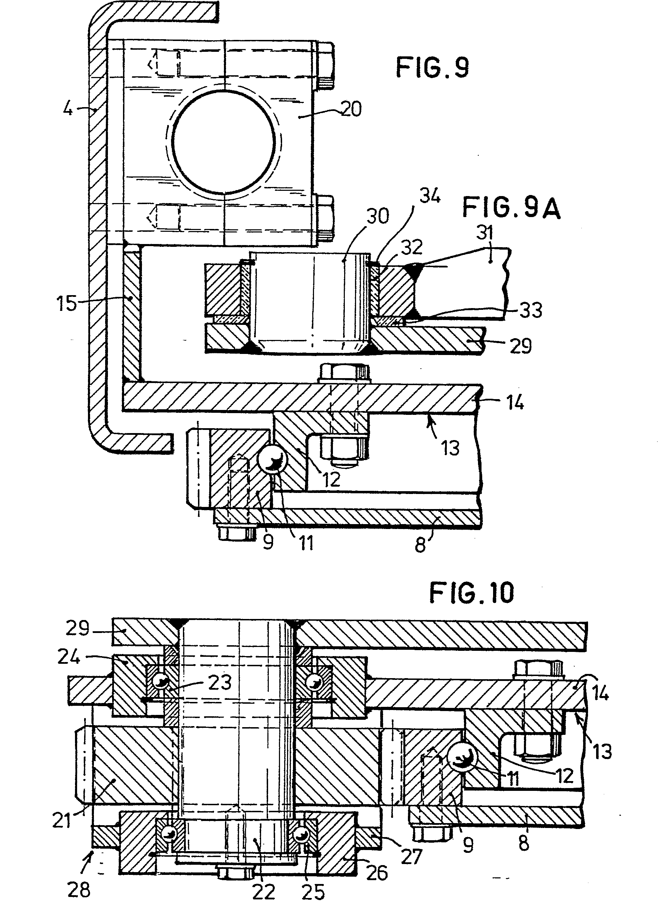

Gemäss der Erfindung ist das Fangmaul 1 in Längsrichtung verschiebbar an dem Chassis 4, 5 von vorzüglich dem ziehenden Fahrzeug befestigt. Dazu ist das Fangmaul 1 mittels zwei U-balken 6 und 7 (Figuren 7 und 8) und einer darauf befestigten Montageplatten 8 (Figuren 9 und 19) fest mit einem Zahnrad 9 verbunden das drehbar um eine Mittellinie 10, die senkrecht zur Ebene des Chassises 4, 5 steht, mittels eines Kugeldrehkranzens 11, 12 auf einem Schlitten 13 montiert ist (Figuren 9 und 10).

Der Schlitten 13 hat eine Bodenplatte 14 mit aufstehenden Seitenwänden 15 und 16, worauf in der Nähe der Endränder zwei teilbare Gleitbüchsen 17 befestigt sind, die eine Lägerbüchse oder ein Anti-Reibungslager mit Kugeln, Rollen oder Nadeln (nicht gezeichnet) aufweisen, und die verschiebbar sind auf Führungsstangen 18 und 19 die mittels Lagerstühle 20 auf die Chassisbalken 4 und 5 befestigt sind.

Das Zahnrad 9 ist in Eingriff mit einem Ritzel 21, das auf einer Welle 22 gekeilt ist, die mit einem Kugellager 23 und einer Lagerbüchse 24 in der Bodenplatte 14 des Untergestells 13, und mit einem Kugellager 25 und einer Lagerbüchse 26, die in der Unterplatte 27 eines U-förmigen, unterhalb der Bodenplatte 14 befestigten Gehäuses 28 montiert ist, gelagert ist. Auf der Welle 22 ist oberhalb der Bodenplatte 14 des Schlittens 13 ein Kurbelarm 29 festgesetzt. In dem anderen Ende des Kurbelarmes 29 ist ein Kurbelzapfen 30 befestigt, worauf im wesentlichen parallel zum Kurbelarm 29 eine Pleuelstange 31 montiert ist. Die Pleuelstange 31 ist auf dem Kurbelzapfen 30 mit einem Gleitlager 32 gelagert und zwischen einem Abstandsring 33 und einem Federring 34 eingesperrt.

Das andere Ende der Pleuelstange 31 ist mittels eines Gelenkstiftes 35 gelenkig zwischen zwei Gelenkaugen 36, die auf einem Querbalken 37 zwischen den Chassisbalken 4 und 5 befestigt sind, gelagert. Der Querbalken 37 kann z.B. aus zwei gegeneinander gesetzten U-Profilen 38, die mittels Endplatten 39 an den Chassisbalken 4 und 5 befestigt sind, bestehen.

Die Kupplungsvorrichtung gemäss der Erfindung wirkt wir folgt (siehe die Figuren 1 - 3):

Wenn die Kombination eines ziehenden Fahrzeuges, insbesondere eines Lastkraftwagens, und eines Anhängewagens geradeaus fährt, stehen die Teile der Kupplungsvorrichtung in der in Figur 1 gezeichneten Position. Dabei steht das Fangmaul 1 in bezug auf das ziehende Fahrzeug in seiner vorderen Position und hat der Abstand zwischen der Hinterseite des ziehenden Fahrzeuges und der Vorderseite des Anhängewagens seinen Geringstwert von mindestens ± 25 cm.

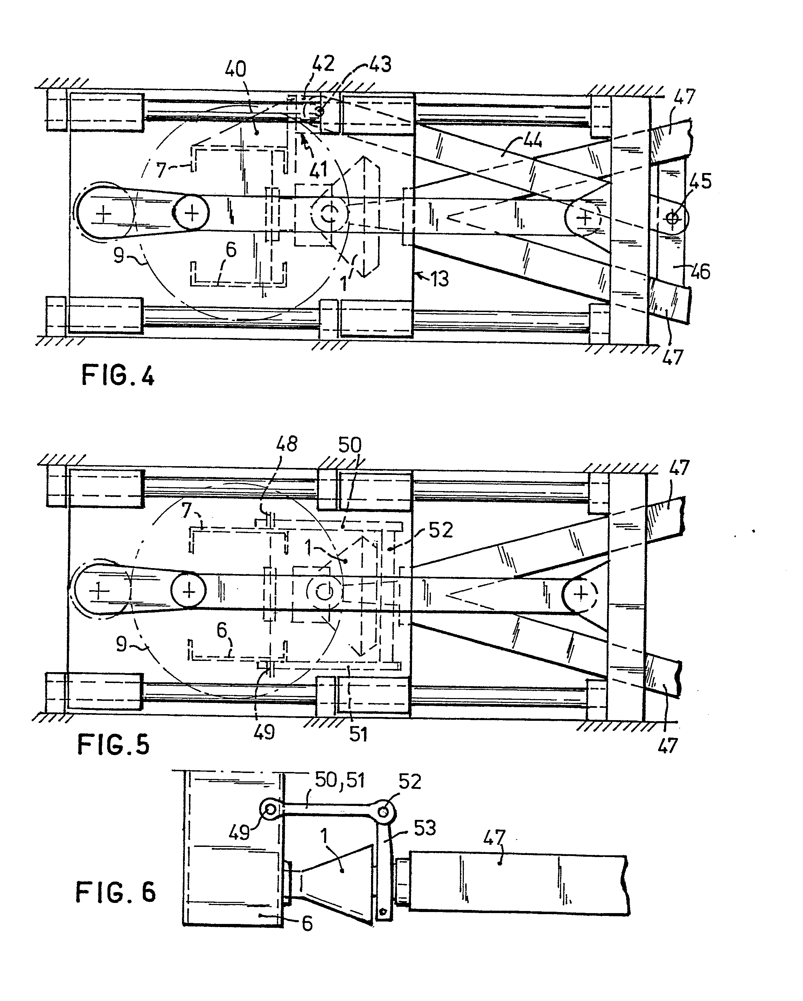

Wenn jetzt mit der Kombination eine Kurve nach links gefahren wird oder falls derart manövriert wird dass die Längsachse des Anhängewagens in einer horizontalen Ebene nach links dreht in bezug auf die Längsachse des ziehenden Fahrzeuges, so wird mittels einer festen Verbindung in einer Horizontalebene zwischen dem Fangmaul 1 und der Zugstange 2 (Figuren 4, 5 und 6) die Zugstange 2 in eine im wesentlichen horizontale Ebene in bezug auf das ziehende Fahrzeug gedreht, wodurch das Zahnrad 9 mit dem Uhrzeiger,
Pfeil L in den Figuren 2 und 3, um die Mittelline 10 gedreht
wird, wodurch das Ritzel 21 und der Kurbelarm entgegen dem Uhrzeiger gedreht werden. Weil das freie Ende des Kurbelarmes 29
mit der Pleuelstange 31 am Chassis 4, 5 des ziehenden Fahrzeuges
festsitzt, wird der Schlitten 13 in der Richtung des Pfeiles A
in bezug auf das Chassis 4, 5 nach hinten versetzt, wordurch der
Abstand zwischen dem ziehenden Fahrzeug und dem Anhängewagen vergrössert wird. Die Versetzung des Schlittens 13 aus der Position
gemäss Figur 1 in die Position gemäss Figur 3 beträgt z.B. $\pm$ 50 cm,
wobei in der Position gemäss Figur 3 zwischen der Hinterseite
des ziehenden Fahrzeuges und der Vorderseite des Anhängewagens
noch genügendes Raum übrigbleibt so dass sicher durch Haarnadelkurven auf Gebirgswege gefahren werden kann. Dieser Geringstabstand zwischen den beiden Fahrzeugen beträgt dabei z.B. $\pm$ 30 cm.

Beim Fahren mit der Kombination durch eine Kurve nach rechts drehen
das Zahnrad 9, das Ritzel 21 und der Kurbelarm 29 natürlich
in der der obenbeschriebenen Richtung entgegengesetzten Richtung.

Die obenbeschriebenen Bewegungen der Teile der Kupplungsvorrichtung
gelten beim Einfahren einer Kurve, wobei sie beim Ausfahren der
Kurve wieder zu ihrer Position gemäss Figur 1 zurückbewegen.

Die obengenannte feste Verbindung zwischen dem Fangmaul 1 und der
Zugstange ist derart konstruiert worden, dass das Fangmaul 1 und
die Zugstange in einer Horizontalebene nicht in bezug aufeinander
bewegbar sind, jedoch in einer Vertikalebene frei in bezug aufeinander gelenkig sind.

Dazu ist gemäss Figur 4 auf einem der U-Balken 6 und 7, die das
Fangmaul 1 mit dem Zahnrad 9 verbinden, ein Ausleger 40 befestigt,
worauf an der Hinterseite ein Tragstuhl 41 befestigt ist, die aus
zwei im Abstand voneinander vorgesehene Streifen 42 besteht,
worin ein vertikal stehender Gelenkstift 43 montiert wird, der zwischen den Streifen einen kugeliger Teil (nicht gezeichnet) hat, derart, dass ein Universalgelenk befildet worden ist. Der Gelenkstift 42 ist ausnehmbar in dem Streifen 42 montiert.

Auf dem kugeligen Mittenteil des Gelenkstiftes 43 ist mit einer Lagerbüchse (nicht gezeichnet) das eine Ende einer Lenkstange 44 montiert, die mit seinem anderen Ende mittels eines ähnlichen Universalgelenks 45 wie obenbeschrieben, auf einem Querstück 46 zwischen den Schenkeln 47 einer gabelförmigen Zugstange 48 montiert ist. Die Lenkstange 44 kann auch von dem Gelenkstift 45 losgemacht werden.

Die Teile 6/7, 40, 42 - 47 bilden ein in einer Horizontalebene starres Dreieck oder Vieleck der dafür sorgt, dass der Schlitten 13 beim Kurvenfahren mit der Kombination oder beim Manövrieren unter allen Umständen versetzt wird.

Eine andere Ausführungsform einer festen Verbindung in einer Horizontalebene zwischen dem Fangmaul 1 und der Zugstange 2 ist in den Figuren 5 und 6 gezeichnet worden.

Dabei ist an der Aussenseite der U-Balken 6 und 7 jemals ein Gelenkstift 48, 49 (oder ein durchgehender Gelnkstift) montiert, worauf gelenkig ein Stab 50 bzw. 51 montiert ist, welche Stäbe mittels eines Gelenkbolzens 52 miteinander verbunden sind. Auf dem Gelenkbolzen 52 ist gelenkig ein U-förmiger Arm 53 montiert, der mit der U-förmigen Höhlung über den vorderen Teil der Zugstange greift und dessen Schenkel unterhalb der Zugstange mittels eines Sperrbolzens (nicht gezeichnet) miteinander verbunden sind.

Auch bei dieser Ausführungsform der Verbindung sind also die Zugstange 47 und das Fangmaul 1 in einer Horizontalebene starr miteinander gekuppelt.

Dank der Universalgelenke 43 und 45 (Figur 4) und der Gelenkstifte 49, 52 (Figuren 5 und 6) bleibt die Zugstange 47 in einer
Vertikalebene frei gelenkig in bezug auf das Fangmaul 1.


tD/EtM/HH

Ansprüche
---------

1. Kupplungsvorrichtung zwischen einem ziehenden Fahrzeug und
   einem Anhängewagen, die ein an das eine Fahrzeug montiertes
   Fangmaul enthält und eine Zugstange, die an das andere Fahrzeug montiert ist und die mittels eines Kupplungsbolzens mit
   dem Fangmaul verbindbar ist, dadurch gekennzeichnet, dass
   das Fangmaul (1) in Längsrichtung verschiebbar an dem Chassis
   (4, 5) des diesbezüglichen Fahrzeuges montiert ist.

2. Kupplungsvorrichtung nach Anspruch 1, wobei das Fangmaul an
   dem Chassis des ziehenden Fahrzeuges und die Zugstange an einem Raduntergestell des Anhängewagens montiert ist, dadurch
   gekennzeichnet, dass das Fangmaul (1) einerseits über ein
   Zahnradgetriebe (9, 21) und einen Kurbelpleuelstangemechanismus
   (29, 31) mit dem Chassis (4, 5) des ziehenden Fahrzeuges
   gekuppelt ist und andererseits drehbar ist verbunden mit
   einem Schlitten (13), der in Längsrichtung verschiebbar an
   dem Chassis (4, 5) des ziehenden Fahrzeuges montiert ist, und
   dass das Fangmaul (1) und die Zugstange (2, 47) in der
   Horizontalfläche steif miteinander verbunden sind.

3. Kupplungsvorrichtung nach Anspruch 1 oder 2, dadurch gekennzeichnet, dass das Fangmaul (1) fest mit einem Zahnrad (9)
   verbunden ist, das drehbar um eine senkrecht auf der Fläche
   des Chassises (4, 5) stehende Mittellinie (10) an dem Schlitten
   (13) montiert ist, der in Längsrichtung des Chassises (4, 5)
   verschiebbar geführt ist, und das in Eingriff mit einem
   Ritzel (21) ist, das auf einer Achse (22) befestigt ist, die drehbar auf dem Schlitten (13) montiert ist und auf der ein Kurbelarm (29) befestigt ist, der gelenkig mit einer Pleuelstange
(31) verbunden ist, die an seinem anderen Ende gelenkig mit
einem fest an dem Chassis befestigten Teil (38) verbunden
ist, in solcher Weise, dass wenn das ziehende Fahrzeug und
der Anhängewagen in Längsrichtung axial ausgerichtet sind,
der Kurbelarm (29) und die Pleuelstange (31) axial ausgerichtet sind.

4. Kupplungsvorrichtung nach Anspruch 3, dadurch gekennzeichnet,
dass das Zahnrad (9) mittels eines Kugeldrehkranzes (11, 12)
auf dem Schlitten (13) montiert ist, dass die Ritzelachse
(22) durch Kugellager (23, 25) drehbar in einer
Bodenplatte (14) des Schlittens (13) montiert ist, dass der
Schlitten (13) auf beiden Seiten mittels Gleitbüchsen (17)
verschiebbar auf Führungsstangen (18, 19) montiert ist, die
an den Chassisbalken (4, 5) befestigt sind und dass die
Pleuelstange (31) gelenkig mit einem Querbalken (38) verbunden
ist, der fest zwischen den Chassisbalken (4, 5) befestigt ist.

5. Kupplungsvorrichtung nach einem der Ansprüche 2 - 4, dadurch
gekennzeichnet, dass zwischen einem festen Punkt (43) an dem
Fangmaul (1), das in einer Entfernung vom Gelenkmittelpunkt
zwischen Fangmaul (1) und Zugstange (47) liegt, und einem
festen Punkt (45) an der Zugstange (47) eine Lenkstange (44)
angeordnet ist, in solcher Weise, dass das Fangmaul (1) und die
Zugstange (47) in einer Horizontalfläche steif miteinander
verbunden sind.

6. Kupplungsvorrichtung nach Anspruch 5, dadurch gekennzeichnet,
dass die festen Punkte (43, 45) an dem Fangmaul (1) bzw. der
Zugstange (47) als Universalgelenke ausgeführt sind.

0231555

FIG.1

FIG.2

FIG.3

0231555

FIG.4

FIG.5

FIG.6

FIG.7

0231555

FIG.8

0231555

FIG.9

FIG.9A

FIG.10

European Patent
Office

**EUROPEAN SEARCH REPORT**

0231555
Applic...

EP 86 20 2364

## DOCUMENTS CONSIDERED TO BE RELEVANT

| Category | Citation of document with indication. where appropriate, of relevant passages | Relevant to claim | CLASSIFICATION OF THE APPLICATION (Int Cl 4) |
|---|---|---|---|
| X | DE-A-3 235 546 (KRONE)<br>* Page 15, line 7 - page 16, line 23; figures 5-7 * | 1 | B 62 D 13/02<br>B 60 D 1/00 |
| A | | 2-5 | |
| X | DE-A-3 115 009 (RANCKE)<br>* Whole document * | 1 | |
| A | DE-U-8 421 511 (KRONE)<br>* Whole document * | 1-5 | |
| A | DE-U-8 304 332 (KRONE)<br>* Whole document * | 1-4 | |
| A | DE-A-3 328 123 (BAUDENBACHER)<br>* Whole document * | 1-4 | TECHNICAL FIELDS SEARCHED (Int. Cl.4) |
| A | EP-A-0 066 269 (K. KÄSSBOHRER FAHRZEUGWERKE GmbH)<br>* Whole document * | 1,5-6 | B 60 D 1<br>B 62 D 13<br>B 62 D 53 |
| A | DE-A-3 414 610 (SCHMITZ)<br>* Figures * | 1 | |

The present search report has been drawn up for all claims

| Place of search | Date of completion of the search | Examiner |
|---|---|---|
| THE HAGUE | 09-04-1987 | LINTZ C.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82